# EUROPEAN PATENT APPLICATION

(11) **EP 4 155 942 A2**
(43) Date of publication of application: **29.03.2023**
(21) Application number: 22208761.1
(22) Date of filing: 22.11.2022
(51) Int. Cl.: G06F 11/34

(54) **METHOD AND APPARATUS FOR LOAD TESTING, AND CORRESPONDING STORAGE MEDIUM**

(30) Priority: 29.11.2021 CN 202111430779
(71) Applicant: Beijing Baidu Netcom Science and Technology Co., Ltd., Beijing 100085 (CN)
(72) Inventor: QIAO, Minghe, Beijing, 100085 (CN); JI, Chaoping, Beijing, 100085 (CN)
(74) Representative: Manna, Sara

(57) **Abstract**

A method for testing a pressure, an electronic device and a storage medium. A start command for testing pressure is received. In response to the start command, a Mirror Disc File MDF is obtained, in which the MDF includes a pressure engine and basic configuration information. A plurality of pressure containers is created based on the MDF. Pressure test is performed on the intranet services by the plurality of pressure containers.

## Description

### TECHNICAL FIELD

The disclosure relates to the field of computer technology, in particular to the technical fields of cloud computing, micro-services and intelligent testing.

### BACKGROUND

With the rise of micro-service architecture and the enhancement of information security awareness, more and more services are only allowed to be accessed by the enterprise intranet, and these services can be called intranet services. Currently, in order to measure the performance of the intranet services, pressure test can be performed on the intranet services, so as to analyze and optimize the intranet services based on the performance of the intranet services obtained after the pressure test.

### SUMMARY

The disclosure provides a method for testing a pressure, an apparatus for testing a pressure, and a storage medium.

According to a first aspect of the disclosure, a method for testing a pressure is provided. The method includes:
receiving a start command for testing the pressure;
in response to the start command, obtaining a Mirror Disc File, MDF, in which the MDF includes a pressure engine and basic configuration information, and the basic configuration information includes development environment information supporting an operation of the pressure engine and information on intranet services to be tested;
creating a plurality of pressure containers based on the MDF; and
performing a pressure test on the intranet services by the plurality of pressure containers.

Optionally, creating the plurality of pressure containers based on the MDF includes:
determining a first number of pressure containers based on a peak pressure and a concurrent number supported by a single pressure container; and
creating the first number of pressure containers based on the MDF.

Optionally, the pressure engine and the basic configuration information are received from a client;
the MDF is obtained by packing the pressure engine and the basic configuration information; and
the MDF is uploaded to an MDF library.

Optionally, receiving the start command includes:
receiving the start command sent by the client through an Application Programming Interface, API.

Optionally, the method further includes:
receiving an end command for testing the pressure sent by the client through the API; and
in response to the end command, stopping the pressure test and sending test result data to the client.

Optionally, the method further includes:
releasing the plurality of pressure containers.

According to a second aspect of the disclosure, an apparatus for testing a pressure is provided. The apparatus includes: a first receiving module, an obtaining module, a creating module and a testing module.

The first receiving module is configured to receive a start command for testing the pressure.

The obtaining module is configured to, in response to the start command, obtain an MDF, in which the MDF includes a pressure engine and basic configuration information, and the basic configuration information includes development environment information supporting an operation of the pressure engine and information on intranet services to be tested.

The creating module is configured to create a plurality of pressure containers based on the MDF.

The testing module is configured to perform a pressure test on the intranet services by the plurality of pressure containers.

Optionally, the creating module is configured to:
determine a first number of pressure containers based on a peak pressure and a concurrent number supported by a single pressure container; and
create the first number of pressure containers based on the MDF.

Optionally, the apparatus further includes:
a second receiving module, configured to receive the pressure engine and the basic configuration information from a client;
a packing module, configured to obtain the MDF by packing the pressure engine and the basic configuration information; and
an uploading module, configured to upload the MDF to an MDF library.

Optionally, the first receiving module is configured to receive the start command sent by the client through an Application Programming Interface, API.

Optionally, the apparatus further includes:
a third receiving module, configured to receive an end command for testing the pressure sent by the client through the API; and
a sending module, configured to, in response to the end command, stop the pressure test and send test result data to the client.

Optionally, the apparatus further includes:
a releasing module, configured to release the plurality of pressure containers.

According to a third aspect of the disclosure, a non-transitory computer-readable storage medium storing computer instructions is provided. The computer instructions are configured to cause a computer to implement the method according to any one of the first aspect of the disclosure.

According to a fourth aspect of the disclosure, a computer program product including computer programs is provided. When the computer programs are executed by a processor, the method according to any one of the first aspect of the disclosure.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a method for testing a pressure according to an embodiment of the disclosure.
FIG. 2 is a flowchart of another method for testing a pressure according to an embodiment of the disclosure.
FIG. 3 is a flowchart of yet another method for testing a pressure according to an embodiment of the disclosure.
FIG. 4 is an exemplary flowchart of a method for testing a pressure according to an embodiment of the disclosure.
FIG. 5 is a schematic diagram of an apparatus for testing a pressure according to an embodiment of the disclosure.
FIG. 6 is a block diagram of an electronic device used to implement the method for testing a pressure according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope of the disclosure. For clarity and conciseness, descriptions of well-known functions and structures are omitted in the following description.

In the technical solution of the disclosure, collection, storage, use, processing, transmission, provision and disclosure of the user's personal information involved are all in compliance with relevant laws and regulations, and do not violate public order and good customs.

In the related art, pressure testing can be performed on the intranet services through self-developed or open source pressure engines, such as Jmeter and Gatling.

For example, in case of an intranet physical computer room, multiple pressure engines are deployed in a physical machine according to a pressure peak required for testing, so as to obtain a physical machine cluster for the pressure test, and use the physical machine cluster to serve the pressure test on the intranet services.

For another example, in case of a cloud server cluster, multiple pressure engines are deployed in the cloud servers of the cloud service cluster, and a dedicated network line between each of the cloud servers and the corresponding intranet service is established, to make the communication between the cloud servers and the intranet services smooth. During the pressure test, the cloud service resources are scheduled according to the pressure peak required for the test, so as to realize the pressure on the intranet services.

Before performing the pressure test on the servers according to the above two solutions, professional technicians are required to build a physical machine cluster or cloud server cluster for testing the intranet services in advance. However, the above process is relatively complicated. For example, for the physical machine cluster, an IP address needs to be applied for each physical machine, a network between the physical machine and the intranet services is built, and a pressure engine is installed for each physical machine.

After the pressure test is completed, if the physical machines used for the pressure test are released, the physical machine cluster needs to be rebuilt when the pressure test is required next time. If the physical machines used for the pressure test are not released, the physical machine cluster will be idle, resulting in a waste of resources and a low resource usage rate.

In order to improve the resource usage rate, the embodiments of the disclosure provide a method for testing a pressure, an apparatus for testing a pressure, an electronic device and a storage medium.

The method for testing a pressure of the embodiments of the disclosure may be executed by a Cloud Container Engine (CCE).

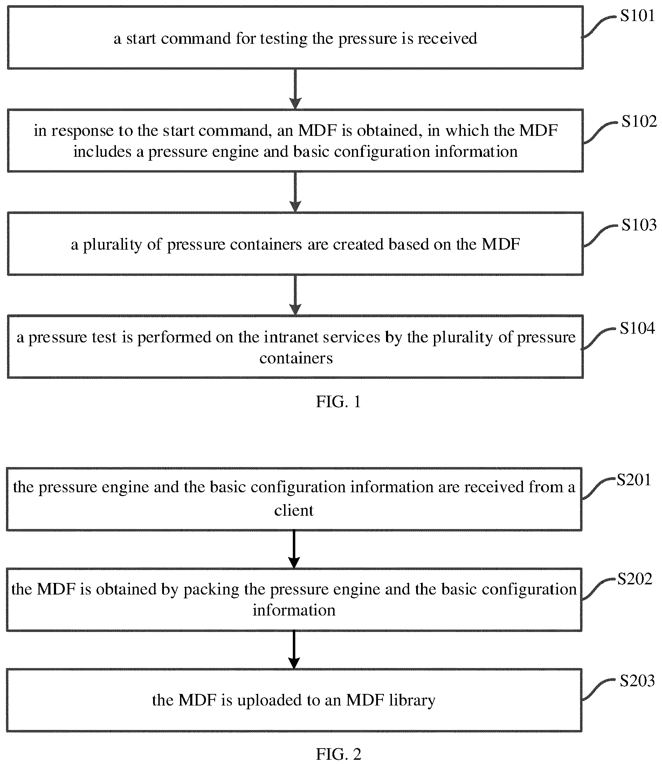

The method for testing a pressure of the embodiments of the disclosure will be introduced below. As illustrated in FIG. 1, the method includes the following steps.

At block S101, a start command for testing pressure is received.

The CCE can receive the start command sent by a client through an Application Programming Interface (API), and the CCE provides the API for the client. When the user needs to test the intranet services, the client sends the start command to the CCE through the API. That is, it is convenient for the user to flexibly control the start of the testing, and since the client only needs to make a simple API call to send the start command, there is no need for a complex deployment, and thus the implementation is relatively simple.

At block S102, in response to the start command, a MDF is obtained, in which the MDF includes a pressure engine and basic configuration information.

The pressure engine in the MDF can be a self-developed or open source pressure engine, such as Jmeter, and Gatling. The basic configuration information includes development environment information supporting an operation of the pressure engine and information on intranet services to be tested.

The development environment information may include: a plug-in or a Java Development Kit (JDK) required to run the pressure engine. The information on the intranet service to be tested may include: an intranet service identifier, an intranet service Uniform Resource Locator (URL), a page to be tested provided by the intranet service, and page parameters of the page to be tested.

At block S103, a plurality of pressure containers are created based on the MDF.

In the embodiment of the disclosure, the pressure container may be a Docker container. The Docker container is an open-source application container engine, which may also be referred to as a Docker application.

The pressure container can be obtained by adding a read-write layer to the MDF. The pressure engine can run on the pressure container, and the CCE can create multiple pressure containers, to obtain a pressure container cluster composed of multiple pressure containers.

At block S104, a pressure test is performed on the intranet services by the plurality of pressure containers.

The intranet services are intranet services on which the pressure test is performed. The CCE can control multiple pressure containers to send test data to the intranet services, thereby performing the pressure test on the intranet services.

According to the method, when the start command is received, the pressure containers can be created automatically according to the MDF including the pressure engine and the pressure configuration information, and then the pressure containers can be used to perform the pressure test on the intranet services. It can be seen that, since the pressure engine in the embodiment of the disclosure is implemented by the container technology, the pressure container is created according to the MDF only when the start command is received, and there is no need to deploy in advance. Moreover, there is no need to create a pressure container when the pressure test does not need to be performed, that is, container resources will be occupied only when the pressure test is required, which avoids resource waste and improves the resource usage rate.

In an embodiment, the CCE and the pressure container are both in a Virtual Private Cloud (VPC) network, which is a user-defined virtual network. The network address space can be flexibly set according to actual needs, to achieve private network isolation. Therefore, virtual networks can communicate with each other in a stable, high-speed, and peer-to-peer manner.

In the embodiment of the disclosure, the pressure container cluster and the intranet services may be connected through a dedicated network line or a VPN, and the pressure container cluster and the intranet services together form a hybrid cloud, so that the communication between the pressure container cluster and the intranet services is smooth and the information transmission is secure.

In the embodiment of the disclosure, S103 may include: determining a first number of pressure containers based on a peak pressure and a concurrent number supported by single pressure container; and creating the first number of pressure containers based on the MDF.

The peak pressure is the maximum concurrent number when testing the intranet services. The concurrent number refers to the number of connections that transmit data to the intranet services at the same time.

The concurrent numbers supported by the pressure containers of different specifications are different. The concurrent number supported by a CPU having 1G memory and 1 core is 100. Assuming that the pressure container has a CPU with 2G memory and 2 cores, the concurrent number supported by the pressure container is 200.

If the peak pressure is 10000, the first number is 10000/200=50, that is, 50 pressure containers need to be created and involved in the pressure container cluster.

In the embodiment of the disclosure, the CCE can obtain the peak pressure in the following three implementations.

In the first implementation, the basic configuration information includes the peak pressure, and the CCE can obtain the peak pressure from the basic configuration information.

In the second implementation, the CCE receives the peak pressure sent by the client before performing the pressure test.

In the third implementation, the peak pressure is stored in the device where the CCE is located in advance, and the CCE can directly obtain the pre-saved peak pressure.

In the embodiment of the disclosure, a first number of copies of the MDF are made, and then a read-write layer is added to each MDF copy, to obtain the first number of pressure containers.

According to the method, since the quantity of the pressure container can be calculated according to the peak pressure, and then the CCE can create the pressure containers according to the calculated quantity, so that there will be no waste of resources. If the peak pressure of each pressure test is different, the number of pressure containers created by the CCE after receiving the start command is also different at each time, which is equivalent to the ability to automatically shrink and expand the pressure container cluster according to the change of the peak pressure. If the existing art is adopted to deploy a physical machine cluster, the performance of the physical machine cluster depends on the number of physical machines owned by the user. If the requirement exceeds the pressure capacity of the physical machines owned by the user, the user needs to continue to purchase physical machines and re-deploy the physical machine cluster, and thus the costs of machine and labor are huge. In the embodiment of the disclosure, the user does not need to care about the deployment details of the pressure containers, and the CCE can automatically create the containers according to the MDF, and thus there is no need to perform complex deployment operations manually, which reduces labor costs and flexibly meets the requirements, thereby improving the accuracy of the determined number of pressure container and improving the efficiency of pressure test.

In addition, the physical machine cluster in the related art involves a large number of software devices and hardware devices, and requires professional operation and maintenance personnel to complete the deployment of the physical machine cluster. However, in the embodiment of the disclosure, the CCE can complete an automatic deployment, and thus the usability of method of the disclosure is high.

In another embodiment of the disclosure, before executing the process of FIG. 1, the MDF needs to be prepared. As illustrated in FIG. 2, the method also includes the following steps.

At block S201, the pressure engine and the basic configuration information are received from a client.

When the user needs to perform the pressure test on the intranet services, the client can upload the pressure engine and the basic configuration information required for the pressure test.

At block S202, the MDF is obtained by packing the pressure engine and the basic configuration information.

At block S203, the MDF is uploaded to an MDF library.

Correspondingly, when the start command is received by the CCE, the MDF is obtained from the MDF library.

Optionally, the client can also send the packed MDF to the CCE, and then the CCE can upload the MDF to the MDF library after receiving the MDF library.

According to this method, the pressure engine and the basic configuration information are packed to obtain the MDF, and the MDF is uploaded to the MDF library. In this way, when the pressure test is required, the CCE can obtain the MDF from the MDF library at any time to create multiple containers. The MDF can be reused, and there is no need to manually install the pressure engine on each physical machine, thereby saving the labor costs. After the MDF is uploaded to the MDF library, the CCE can also manage the MDF version, which facilitates the rollback and reuse of the MDF.

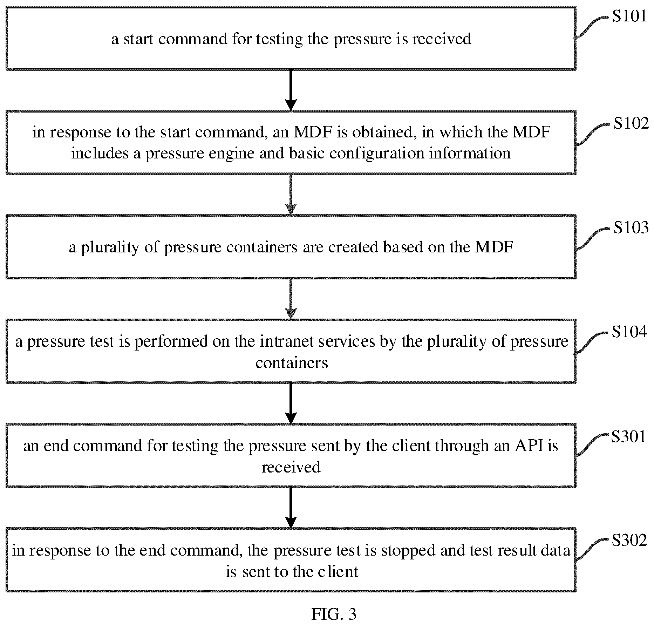

In another embodiment of the disclosure, on the basis of the above embodiments, as illustrated in FIG. 3, after S104, the method further includes the following steps.

At block S301, an end command for testing the pressure sent by the client through an API is received.

When the user needs to stop the pressure test, the client can send the stop command to the CCE through the API.

Optionally, during the pressure test, the user can also query the cluster state through the client, and the client can obtain the cluster state through the API, and display it to the user. The cluster state includes the number of containers included in the cluster, and the load of each container. Based on the cluster state, the user can determine whether to expand or shrink the volume of the cluster according to actual needs.

At block S302, in response to the end command, the pressure test is stopped and test result data is sent to the client.

By adopting this method, the user can stop the test in real time by operating the client, without manually stopping the test by controlling the physical machine, which can reduce labor costs and improve a test efficiency.

Optionally, after the CCE stops the pressure test, the above multiple pressure containers can be released.

If the method of deploying the physical machine cluster in the related art is adopted, the physical machines are released after the test is completed, and redeployment is required before each test, and thus the efficiency is low. If the physical machines are not released, idle resources will be wasted and the resource usage rate will be low. Compared with the related art, in the embodiment of the disclosure, the pressure containers are released after the test is completed, the container resources will not be idle, and the resource usage rate is improved. When the pressure test needs to be performed, the CCE can quickly create the pressure containers again, which can improve the resource usage rate without reducing efficiency.

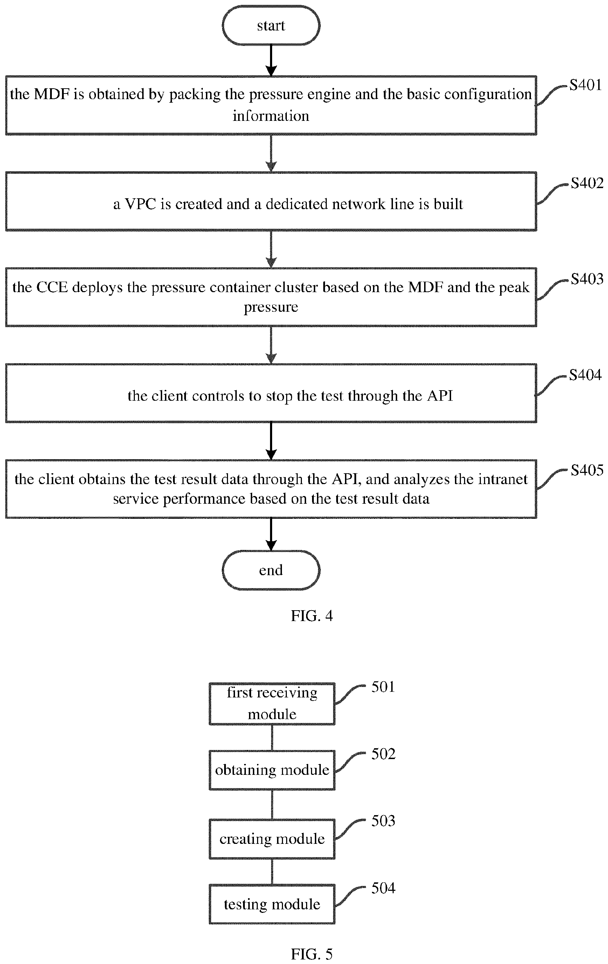

As illustrated in FIG. 4, FIG. 4 is an exemplary flowchart of a method for testing pressure according to an embodiment of the disclosure, which is described below with reference to FIG. 4.

At block S401, the MDF is obtained by packing the pressure engine and the basic configuration information.

When the pressure test is performed, the CCE can obtain the MDF from the MDF library, thereby realizing reuse of the MDF.

At block S402, a VPC is created and a dedicated network line is built.

The dedicated network line is configured to connect the pressure container cluster and the intranet services, and a VPN can also be used to connect, so that the communication between the pressure container cluster and the intranet services can be smooth.

At block S403, the CCE deploys the pressure container cluster based on the MDF and the peak pressure.

When the CCE receives the start command, the MDF is obtained, and the pressure containers are created based on the MDF and the peak pressure. Further, the pressure container cluster is formed with the pressure containers.

At block S404, the client controls to stop the test through the API.

When the user needs to stop the test, the user can operate through the client interface. After the client recognizes the operation of stopping the test triggered by the user, it can send the stop command to the CCE through the API, and then the CCE controls the container cluster to stop sending test data to the intranet services.

At block S405, the client obtains the test result data through the API, and analyzes the intranet service performance based on the test result data.

According to this method, since the CCE can automatically deploy the pressure engine cluster, without performing deployment operation manually or based on the script, which reduces the deployment costs. The user can control the start of the test through the API when the pressure test needs to be performed, which simplifies the user operation. After the test is over, the test resources are released, which will not make the test resources idle, thereby improving the resource usage rate.

Corresponding to the above method embodiments, the embodiment of the disclosure further provides an apparatus for testing pressure is provided. As illustrated in FIG. 5, the apparatus includes: a first receiving module 501, an obtaining module 502, a creating module 503 and a testing module 504.

The first receiving module 501 is configured to receive a start command for testing a pressure.

The obtaining module 502 is configured to, in response to the start command, obtain an MDF, in which the MDF includes a pressure engine and basic configuration information, and the basic configuration information includes development environment information supporting an operation of the pressure engine and information on intranet services to be tested.

The creating module 503 is configured to create a plurality of pressure containers based on the MDF.

The testing module 504 is configured to perform a pressure test on the intranet services by the plurality of pressure containers.

In an embodiment of the disclosure, the creating module 503 is further configured to:
determine a first number of pressure containers based on a peak pressure and a concurrent number supported by single pressure container; and
create the first number of pressure containers based on the MDF.

In an embodiment of the disclosure, the apparatus further includes: a second receiving module, a packing module and an uploading module.

The second receiving module is configured to receive the pressure engine and the basic configuration information from a client.

The packing module is configured to obtain the MDF by packing the pressure engine and the basic configuration information.

The uploading module is configured to upload the MDF to an MDF library.

In an embodiment of the disclosure, the first receiving module 501 is further configured to receive the start command sent by the client through an API.

In an embodiment of the disclosure, the apparatus further includes: a third receiving module and a sending module.

The third receiving module is configured to receive an end command for testing a pressure sent by the client through an API.

The sending module is configured to, in response to the end command, stop the pressure test and send test result data to the client.

In an embodiment of the disclosure, the apparatus further includes: a releasing module, configured to release the plurality of pressure containers.

According to the embodiments of the disclosure, the disclosure provides an electronic device, a readable storage medium and a computer program product.

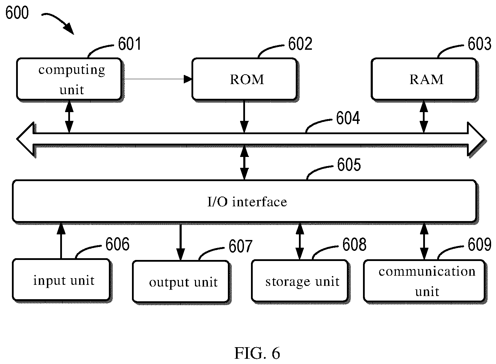

FIG. 6 is a block diagram of an example electronic device 600 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device 600 includes: a computing unit 601 performing various appropriate actions and processes based on computer programs stored in a Read-Only Memory (ROM) 602 or computer programs loaded from the storage unit 608 to a Random Access Memory (RAM) 603. In the RAM 603, various programs and data required for the operation of the device 600 are stored. The computing unit 601, the ROM 602, and the RAM 603 are connected to each other through a bus 604. An input/output (I/O) interface 605 is also connected to the bus 604.

Components in the device 600 are connected to the I/O interface 605, including: an inputting unit 606, such as a keyboard, a mouse; an outputting unit 607, such as various types of displays, speakers; a storage unit 608, such as a disk, an optical disk; and a communication unit 609, such as network cards, modems, and wireless communication transceivers. The communication unit 609 allows the device 600 to exchange information/data with other devices through a computer network such as the Internet and/or various telecommunication networks.

The computing unit 601 may be various general-purpose and/or dedicated processing components with processing and computing capabilities. Some examples of computing unit 601 include, but are not limited to, a CPU, a Graphics Processing Unit (GPU), various dedicated AI computing chips, various computing units that run machine learning model algorithms, and a Digital Signal Processor (DSP), and any appropriate processor, controller and microcontroller. The computing unit 601 executes the various methods and processes described above, such as the method for testing pressure. For example, in some embodiments, the method may be implemented as a computer software program, which is tangibly contained in a machine-readable medium, such as the storage unit 608. In some embodiments, part or all of the computer program may be loaded and/or installed on the device 600 via the ROM 602 and/or the communication unit 609. When the computer program is loaded on the RAM 603 and executed by the computing unit 601, one or more steps of the method described above may be executed. Alternatively, in other embodiments, the computing unit 601 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System On Chip (SOCs), Complex Programmable Logic Devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in combination with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, Electrically Programmable Read-Only-Memories (EPROM), flash memories, fiber optics, Compact Disc Read-Only Memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: Local Area Network (LAN), Wide Area Network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the principle of this application shall be included in the protection scope of this application.

## Claims

1. A method for testing a pressure, comprising:
receiving (S101) a start command for testing the pressure;
in response to the start command, obtaining (S102) a Mirror Disc File, MDF, wherein the MDF comprises a pressure engine and basic configuration information, and the basic configuration information comprises development environment information supporting an operation of the pressure engine and information on intranet services to be tested;
creating (S103) a plurality of pressure containers based on the MDF; and
performing (S104) a pressure test on the intranet services by the plurality of pressure containers.

2. The method of claim 1, wherein creating (S103) the plurality of pressure containers based on the MDF comprises:
determining a first number of pressure containers based on a peak pressure and a concurrent number supported by a single pressure container; and
creating the first number of pressure containers based on the MDF.

3. The method of claim 1 or 2, wherein,
the pressure engine and the basic configuration information are received from a client;
the MDF is obtained by packing the pressure engine and the basic configuration information; and
the MDF is uploaded to an MDF library.

4. The method of any one of claims 1-3, wherein receiving (S101) the start command comprises:
receiving the start command sent by the client through an Application Programming Interface, API.

5. The method of any one of claims 1-4, further comprising:
receiving (S301) an end command for testing the pressure sent by the client through the API; and
in response to the end command, stopping (S302) the pressure test and sending test result data to the client.

6. The method of claim 5, further comprising:
releasing the plurality of pressure containers.

7. An apparatus for testing a pressure, comprising:
a first receiving module (501), configured to receive a start command for testing the pressure;
an obtaining module (502), configured to, in response to the start command, obtain a Mirror Disc File, MDF, wherein the MDF comprises a pressure engine and basic configuration information, and the basic configuration information comprises development environment information supporting an operation of the pressure engine and information on intranet services to be tested;
a creating module (503), configured to create a plurality of pressure containers based on the MDF; and
a testing module (504), configured to perform a pressure test on the intranet services by the plurality of pressure containers.

8. The apparatus of claim 7, wherein the creating module (503) is configured to:
determine a first number of pressure containers based on a peak pressure and a concurrent number supported by a single pressure container; and
create the first number of pressure containers based on the MDF.

9. The apparatus of claim 7 or 8, further comprising:
a second receiving module, configured to receive the pressure engine and the basic configuration information from a client;
a packing module, configured to obtain the MDF by packing the pressure engine and the basic configuration information; and
an uploading module, configured to upload the MDF to an MDF library.

10. The apparatus of any one of claims 7-9, wherein the first receiving module (501) is configured to receive the start command sent by the client through an Application Programming Interface, API.

11. The apparatus of any one of claims 7-10, further comprising:
a third receiving module, configured to receive an end command for testing the pressure sent by the client through the API; and
a sending module, configured to, in response to the end command, stop the pressure test and send test result data to the client.

12. The apparatus of claim 11, further comprising:
a releasing module, configured to release the plurality of pressure containers.

13. A non-transitory computer-readable storage medium having computer instructions stored thereon, wherein the computer instructions are configured to cause a computer to implement the method of any one of claims 1-6.

14. A computer program product comprising computer programs, wherein when the computer programs are executed by a processor, the method of any one of claims 1-6 is implemented.
